# EUROPEAN PATENT APPLICATION

(11) **EP 4 379 594 A1**
(43) Date of publication of application: **05.06.2024**
(21) Application number: 23213486.6
(22) Date of filing: 30.11.2023
(51) Int. Cl.: G06F 30/20

(54) **SIMULATION SYSTEM AND SIMULATION METHOD**

(30) Priority: 02.12.2022 JP 2022193628
(71) Applicant: Hitachi, Ltd., Tokyo 100-8280 (JP)
(72) Inventor: MORIMOTO, Yukiko, Tokyo, 100-8280 (JP); FUKUDA, Koji, Tokyo, 100-8280 (JP); MIYAKI, Mariko, Tokyo, 100-8280 (JP); IKEGAYA, Kazuhiro, Tokyo, 100-8280 (JP); KAWAMURA, Ichirou, Tokyo, 100-8280 (JP); KUROSAWA, Yuuichi, Tokyo, 100-8280 (JP)
(74) Representative: Mewburn Ellis LLP

(57) **Abstract**

A simulation system stores information representing a plurality of scenarios of index vectors generated by simulation and a plurality of clusters in which the index vectors in each of a plurality of time steps are classified, classifies the clusters of a final time step of the plurality of scenarios into a plurality of groups, calculates a transition probability at which the index vectors belonging to the cluster in the time step transition to each group in the final time step for each of combinations of the time steps and the clusters and a cluster in which the index vectors belonging to the cluster in the time step are transmissible in a subsequent step, and displays the transition probability and the transmissible cluster.

## Description

### CLAIM OF PRIORITY

The present application claims priority from Japanese patent application JP 2022-193628 filed on December 2, 2022, the content of which is hereby incorporated by reference into this application.

### BACKGROUND OF THE INVENTION

### 1. Field of the Invention

The present invention relates to a simulation system and a simulation method.

### 2. Description of Related Art

As a background technology of the present invention, there is WO2016/194051. WO2016/194051 discloses that "a system stores evaluation information including evaluated parameter sets and an evaluation value of an index of interest of each of the evaluated parameter sets; selects a first evaluated parameter set collection and an evaluation value of a corresponding index of interest from the evaluation information for each of the parameter sets of a first parameter set collection; calculates a first weight corresponding to an evaluation value of the index of interest of each of the parameter sets of the first evaluated parameter set collection based on a distance to each of the evaluated parameter sets of the first evaluated parameter set collection; and calculates an estimated value of a statistic of the index of interest of the parameter set of the first parameter set collection based on the selected evaluation value of the index of interest and the first weight" (see ABSTRACT).

In a Monte Carlo simulation as in the technology disclosed in WO2016/194051, many scenarios (time sequences) of index vectors formed from many indexes are generated, but a method of displaying the many generated scenarios in formats that are easily analyzed by a user has not been disclosed. In particular, for example, WO2016/194051 does not disclose a display that is easily searched by a user for an important junction point or the like to obtain an index vector desired by the user in a certain time step.

### SUMMARY OF THE INVENTION

Accordingly, the purpose of an embodiment of the present invention is to display many scenarios generated by simulation in a format that is easily analyzed by a user.

To solve the foregoing problem, according to an embodiment of the present invention, the following configuration is adopted. A simulation system includes a processor, a memory, and a display device. The memory stores simulation results representing a plurality of scenarios indicating index vectors of a plurality of time steps each generated by simulation and a plurality of clusters in which the index vectors of the plurality of scenarios in each of the plurality of time steps are classified. The processor receives a setting for classifying the clusters of final time steps of the plurality of scenarios into a plurality of groups and executes classification based on the setting, executes a scenario analysis process of calculating, for each of combinations of the time steps and the clusters, a transition probability at which the index vectors belonging to the cluster in the time step transition to each group in the final time step and a cluster in which the index vectors belonging to the cluster in the time step are transmissible in a subsequent step, and displays an analysis map including a display representing the transition probability and a display representing the transmissible cluster on the display device for each of the combinations of the time steps and the clusters.

According to an aspect of the present invention, many scenarios generated by simulation can be displayed in forms which are easily analyzed by users.

Other problems, configurations, and advantages are apparent from description of the following embodiments.

### BRIEF DESCRIPTION OF THE DRAWINGS

FIG. 1 is a block diagram illustrating a configuration example of a simulation system according to a first embodiment;
FIG. 2 is a diagram illustrating a screen configuration example of a portal screen according to the first embodiment;
FIG. 3 is a diagram illustrating a data configuration example of index data according to the first embodiment;
FIG. 4 is a diagram illustrating a data configuration example of simulation input data according to the first embodiment;
FIG. 5 is a flowchart illustrating an example of a simulation process according to the first embodiment;
FIG. 6 is a diagram illustrating an example of simulation result data according to the first embodiment;
FIG. 7 is an explanatory diagram illustrating an example of the simulation process according to the first embodiment;
FIG. 8 is an explanatory diagram illustrating an example of the simulation process according to the first embodiment;
FIG. 9 is a flowchart illustrating an example of a scenario analysis process according to the first embodiment;
FIG. 10 is a diagram illustrating a data configuration example of index change ratio data according to the first embodiment;
FIG. 11 is a diagram illustrating a data configuration example of group data according to the first embodiment;
FIG. 12 is a diagram illustrating a data configuration example of scenario analysis map drawing data according to the first embodiment;
FIG. 13 is a diagram illustrating a screen configuration example of a scenario analysis result display screen (group organization) according to the first embodiment;
FIG. 14 is a diagram illustrating another screen configuration example of the scenario analysis result display screen (group organization) according to the first embodiment;
FIG. 15 is a flowchart illustrating an example of a junction point setting process according to the first embodiment;
FIG. 16 is a diagram illustrating a data configuration example of junction point setting data according to the first embodiment;
FIG. 17 is a diagram illustrating a screen configuration example of a scenario analysis result display screen (junction setting) according to the first embodiment;
FIG. 18 is a flowchart illustrating an example of a factor analysis process according to the first embodiment;
FIG. 19 is a diagram illustrating a data configuration example of factor analysis result data according to the first embodiment;
FIG. 20 is a diagram illustrating a screen configuration example of a scenario analysis result display screen (group confirmation) according to the first embodiment; and
FIG. 21 is a diagram illustrating another screen configuration example of the scenario analysis result display screen (group confirmation) according to the first embodiment.

### DESCRIPTION OF EMBODIMENTS

Hereinafter, embodiments of the present invention will be described in detail with reference to the drawings. In the embodiments, the same configurations are denoted by the same reference numerals in principle, and repeated description thereof will be omitted. The embodiments are merely illustrative of implementing the present invention and do not limit the technical scope of the present invention.

### First Embodiment

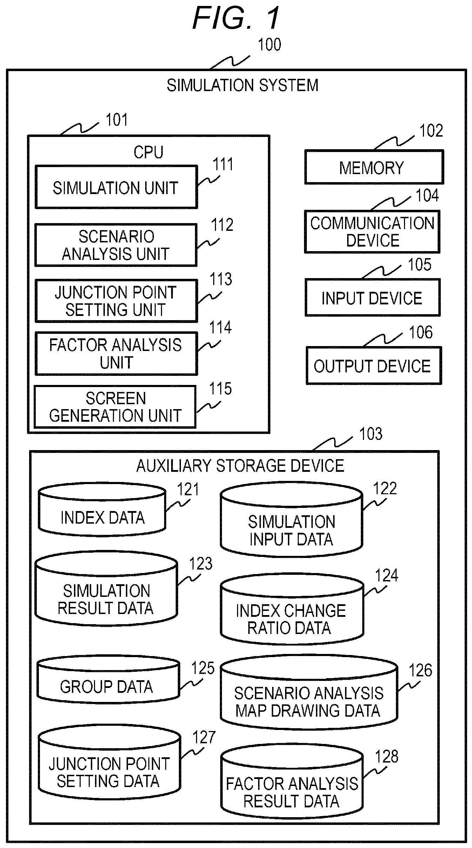

FIG. 1 is a block diagram illustrating a configuration example of a simulation system. A simulation system 100 is configured with, for example, a computer that includes a central processing unit (CPU) 101, a memory 102, an auxiliary storage device 103, a communication device 104, an input device 105, and an output device 106.

The CPU 101 includes a processor and executes programs stored in the memory 102. The memory 102 includes a read only memory (ROM) which is a nonvolatile storage element and a random access memory (RAM) which is a volatile storage element. The ROM stores unchangeable programs (for example, a basic input/output system (BIOS)) or the like. The RAM is a volatile storage element which is fast, such as a dynamic random access memory (DRAM), and temporarily stores programs executed by the CPU 101 and data used when the programs are executed.

The auxiliary storage device 103 is, for example, a nonvolatile storage device which has a large capacity, such as a magnetic storage device (hard disk drive (HDD)) or a flash memory (solid state drive (SSD)), and stores programs executed by the CPU 101 and data used when the programs are executed. That is, the programs are read from the auxiliary storage device 103, loaded to the memory 102, and executed by the CPU 101.

The input device 105 is a device such as a keyboard or a mouse that receives an input from an operator. The output device 106 is a device such as a display device or a printer that outputs an execution result of the programs in a format which can be viewed by the operator.

The communication device 104 is a network interface device that controls communication with other devices according to a predetermined protocol. The communication device 104 may include, for example, a serial interface such as a universal serial bus (USB).

All or some of the programs which are executed by the CPU 101 may be provided to the simulation system 100 from a removable medium (CD-ROM, flash memory, or the like) which is a non-transitory storage medium or from an external computer including a non-transitory storage device via a network, and may be stored in the nonvolatile auxiliary storage device 103 which is a non-transitory storage medium. Therefore, the simulation system 100 may include an interface that reads data from a removable medium.

The simulation system 100 is a computer system that is configured on one computer physically or on a plurality of computers physically or logically, and may operate as a separate thread on the same computer or may operate on a virtual computer constructed on a plurality of physical computer resources.

The CPU 101 includes, for example, a simulation unit 111, a scenario analysis unit 112, a junction point setting unit 113, a factor analysis unit 114, and a screen generation unit 115, which are functional units.

The simulation unit 111 generates a scenario which is a time sequence of index vectors formed from a plurality of indexes by executing a simulation. Hereinafter, in the embodiment, an example in which the simulation unit 111 predicts an index vector in each time step using a Monte Carlo simulation will be described, but an algorithm used for the simulation is not limited to the Monte Carlo simulation.

The scenario analysis unit 112 analyzes a scenario generated by the simulation unit 111. The junction point setting unit 113 sets a junction point and a junction destination to be described below. The factor analysis unit 114 analyzes a factor for proceeding from a junction point to a junction destination. The screen generation unit 115 generates information for displaying a screen on the output device 106.

For example, the CPU 101 operates according to a simulation program loaded on the memory 102 to function as the simulation unit 111, and operates according to a scenario analysis program loaded on the memory 102 to function as the scenario analysis unit 112. For other functional units included in the CPU 101, a relation between a program and a functional unit is similar.

Some or all of the functions of the functional units included in the CPU 101 may be implemented by, for example, hardware such as an application specific integrated circuit (ASIC) or a field-programmable gate array (FPGA).

The auxiliary storage device 103 stores, for example, index data 121, simulation input data 122, simulation result data 123, index change ratio data 124, group data 125, scenario analysis map drawing data 126, junction point setting data 127, and factor analysis result data 128.

The index data 121 includes information regarding an index included in an index vector. The simulation input data 122 includes input information for a simulation by the simulation unit 111. In the simulation input data 122, for example, each index is set as a node, and a directed graph indicating a casual relation between indexes by an edge is defined in, for example, a description format of a causal loop diagram (CLD).

The simulation result data 123 represents a simulation result by the simulation unit 111. The index change ratio data 124 represents a change ratio of an index value in a scenario generated by the simulation unit 111. The group data 125 represents a group of a scenario generated by the simulation unit 111.

The scenario analysis map drawing data 126 is information for drawing an analysis map of a scenario. The junction point setting data 127 represents a set junction point and junction destination. The factor analysis result data 128 represents a factor analysis result.

Some or all of the information stored in the auxiliary storage device 103 may be stored in the memory 102 or may be stored in an external database connected to the simulation system 100.

In the embodiment, information used by the simulation system 100 does not depend on a data structure may be expressed in any data structure. In the embodiment, the information is expressed in a table format. However, for example, a data structure selectively selected from a list, a database, or a queue can store information.

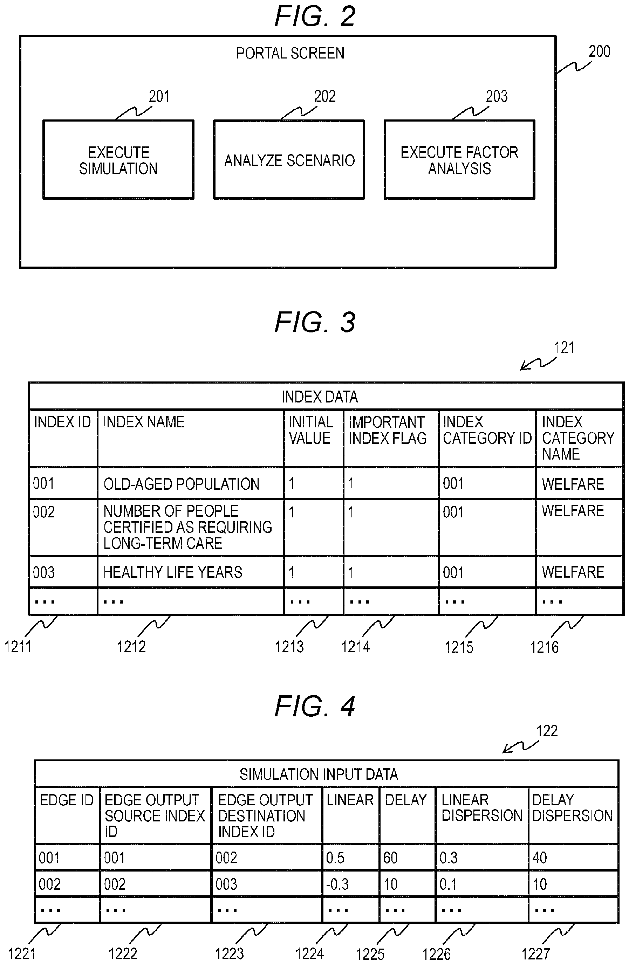

FIG. 2 is a diagram illustrating a screen configuration example of a portal screen. A portal screen 200 is displayed on the output device 106 by the screen generation unit 115. On the portal screen 200, for example, a simulation execution button 201, a scenario analysis button 202, and a factor analysis execution button 203 are displayed.

When the simulation execution button 201 is selected, a simulation process to be described below is executed. When the scenario analysis button 202 is selected, a scenario analysis process to be described below is executed. Note that the simulation analysis process can be executed after the simulation process is executed. When the factor analysis execution button 203 is selected, a factor analysis process to be described below is executed. Note that the factor analysis process can be executed after the scenario analysis process is executed.

FIG. 3 is a diagram illustrating a data configuration example of the index data 121. The index data 121 includes, for example, an index ID field 1211, an index name field 1212, an initial value field 1213, an important index flag 1214, an index category ID field 1215, and an index category name field 1216.

The index ID field 1211 stores an index ID for identifying an index. The index name field 1212 stores a name of the index. The initial value field 1213 stores an initial value (a value in a 0-th step) of the index in the Monte Carlo simulation. In the example of FIG. 3, initial values of all indexes are normalized to 1. That is, a rate of change from an initial value of each index is predicted in each time step (hereinafter simply referred to as a step) of the Monte Carlo simulation. However, a value itself which is not normalized may be set to the initial value of each index value and the value itself of each index may be predicted in each step of the Monte Carlo simulation.

The important index flag 1214 stores an important index flag indicating whether each index is an important index (1 is stored when the index is an important index, and 0 is stored when the index is not an important index). The index category ID field 1215 stores an index category ID for identifying an index category to which each index belongs. The index category name field 1216 stores information indicating a name of the index category.

FIG. 4 is a diagram illustrating a data configuration example of the simulation input data 122. The simulation input data 122 stores, for example, an edge ID field 1221, an edge output source index ID field 1222, an edge output destination index ID field 1223, a linear field 1224, a delay field 1225, a linear dispersion field 1226, and a delay dispersion field 1227.

The edge ID field 1221 stores an edge ID for identifying an edge in a CLD. The edge output source index ID field 1222 stores an index ID of an index which is an output source of the edge. The edge output destination index ID field 1223 stores an index ID of an index which is an output destination of the edge.

The linear field 1224 stores information indicating a linear change ratio (hereinafter also simply referred to as a coefficient) of an index of the output destination of the edge when the index of the output source of the edge is changed. The linear field 1224 can store not only a positive value but also a negative value. That is, a relation between the index of the output source of the edge and the index of the output destination of the edge may be a positive correlation or a negative correlation. The delay field 1225 stores information indicating a time lag from a change in the index of the output source of the edge to a change in the index of the output destination of the edge.

The linear dispersion field 1226 stores a value indicating a dispersion of a value of the linear field 1224. In an example of FIG. 4, a coefficient indicated by the linear field 1224 of an edge ID "001" is "0.5" and a value of the linear dispersion field 1226 is "0.3". Therefore, the coefficient of the edge is selected from a range equal to or greater than 0.2 (= 0.5 - 0.3) and equal to or less than 0.8 (= 0.5 + 0.3). That is, when the index of the edge output source index ID "001" corresponding to the edge of the edge ID "001" increases by 1%, the index of the edge output destination index ID "002" corresponding to the edge of the edge ID "001" increases at any ratio (for example, determined at random) included in a range of 0.2% to 0.8%.

The delay dispersion field 1227 stores a value indicating a dispersion of a coefficient indicated by the linear field 1224. In the example of FIG. 4, a value of the delay field 1225 of the edge ID "001" is "60" and a value of the delay dispersion field 1227 is "40". Therefore, a delay of the edge is selected from a range equal to or greater than 20 (= 60 - 40) and equal to or less than 100 (= 60 + 40). That is, for example, when the index of the edge output source index ID "001" corresponding to the edge of the edge ID "001" is changed and then any number of steps (for example, determined at random) included in the range of 20 steps to 100 steps passes, according to the change, the index of the edge output destination index ID "002" corresponding to the edge of the edge ID "001" is changed.

When a relation between indexes in which the foregoing linearity and delay are considered is summarized assuming that A(t) is an edge output source index of a t-th step, B(t) is an edge output destination index of the t-th step, a is a coefficient, and b is a delay, for example, a value of an edge output destination index of (t + b)-th step can be calculated by B(t + b) = a * (A(t) - A(t - 1)) + B(t + b - 1). A lower limit and an upper limit of the value of the coefficient in which the dispersion is considered or the value of the delay in which the dispersion is considered may be determined in advance.

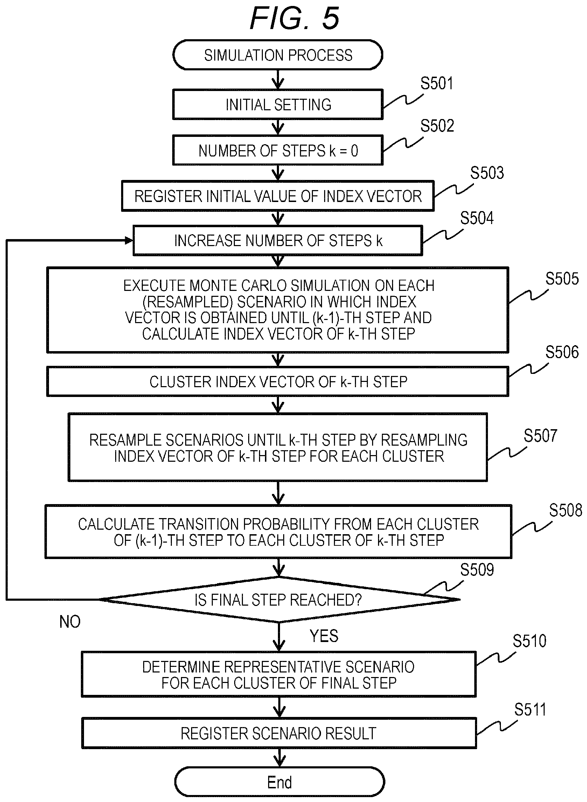

FIG. 5 is a flowchart illustrating an example of the simulation process. The simulation unit 111 executes initial setting of a simulation (S501). In step S501, the simulation unit 111 sets the index data 121 and the simulation input data 122, for example, according to an input from a user through the input device 105.

In step S501, the simulation unit 111 sets a total number of time steps in the Monte Carlo simulation (hereinafter referred to as N steps), the number of scenarios generated in each scenario in each time step of the Monte Carlo simulation (hereinafter referred to as L scenarios), the number of clusters generated in each time step of the Monte Carlo simulation (hereinafter referred to as M clusters), and the number of scenarios obtained from each cluster by resampling in each time step of the Monte Carlo simulation (hereinafter referred to as R scenarios), for example, according to an input from the user through the input device 105.

The simulation unit 111 sets the number of (time) steps k in the Monte Carlo simulation to 0 (S502). The simulation unit 111 acquires an initial value of the index vector from the initial value field 1213 of the index data 121 and registers the initial value in the simulation result data 123 (S503). The index vector is a vector in which values of indexes defined in the index data 121 are listed (for example, in the ascending order of the index IDs).

The simulation unit 111 increases (by 1) the number of steps k (S504). The simulation unit 111 executes the Monte Carlo simulation on each resampled scenario in which the index vector is obtained until (k - 1)-th step (here, at k = 1, there is only one scenario from only the initial value of the index vector) and calculates an index vector of k-th step (S505). For example, a model for executing the Monte Carlo simulation may be stored in advance in the auxiliary storage device 103.

In step S505, the simulation unit 111 calculates L index vectors of the k-th step for each scenario by executing the following process in L patterns for each scenario, for example, until the (k - 1)-th step. Specifically, the simulation unit 111 changes a value of each index included in the index vector minutely from a value of the (k - 1)-th step (for example, at random), further calculates a change in another index due to the minute change in the value of each index based on a structure of the CLD indicated by the index data 121 (where a coefficient and a delay in the CLD are determined at random from a range in which the dispersion is considered), and executes a process for reflecting the calculation result. Accordingly, in step S505, L scenarios until the k-th step are generated from each of the scenarios until the (k - 1)-th step.

The simulation unit 111 clusters the scenarios by classifying the values of the index values until the k-th step of the scenarios generated in step S505 into M clusters (S506). The simulation unit 111 may cluster the scenarios themselves rather than the values of the index vectors of the k-th step of the scenarios generated in step S505. A K-means method is an example of an algorithm of the clustering used in step S506. The simulation unit 111 generates cluster numbers for identifying each cluster generated in step S506 (for example, a cluster number is closer in the cluster to which a distance is closer).

The simulation unit 111 resamples scenarios until the k-th step by R scenarios by resampling R values of the index vectors at the k-th step for each cluster (S507). The simulation unit 111 may execute the resampling on the scenarios themselves rather than the values of the index vectors of the k-th step of the scenario. For example, the resampling in step S507 is executed according to a method similar to a method used in a particle filter method.

The simulation unit 111 calculates a transition probability from each cluster of the (k - 1)-th step to each cluster of the k-th step (S508). Specifically, for example, referring to the resampled scenarios until the k-th step, the simulation unit 111 calculates the transition probability by executing a process of calculating a ratio of the index vectors belonging to the cluster of a cluster number j in the k-th step among the scenarios having the index vectors belonging to the cluster of the cluster number i in the (k - 1)-th step for all (i, j) combinations (here, i and j are natural numbers of 1 or more and M or less). Since the clustering is not executed in the 0-th step, for example, the index vectors at the 0-th step (that is, initial values) may be treated as belonging to a predetermined cluster (for example, a cluster of which the cluster number is 1).

The simulation unit 111 determines whether the number of steps reached the final step (that is, the N-th step) (S509). When the simulation unit 111 determines that the number of steps did not reach the final step (NO in S509), the process returns to S504.

When the simulation unit 111 determines that the number of steps reached the final step (YES in S509), the simulation unit 111 determines a representative scenario for each cluster of the N-th step which is the final step (S510). Specifically, for example, for each cluster of the N-th step, the simulation unit 111 determines a scenario having an index vector which is closest to the center of gravity of the cluster as the representative scenario of the cluster.

The simulation unit 111 registers a simulation result in the simulation result data 123 (S511) and ends the simulation process. In step S511, for example, the simulation unit 111 assigns a scenario ID for identifying a scenario to each of the finally resampled scenarios and registers an index vector value, a cluster number, and a representative scenario flag in each time step of each scenario to the simulation result data 123 (scenario data 1230 included in the simulation result data 123, as will be described below). In step S511, for example, the simulation unit 111 registers the transition probability calculated in step S508 in the simulation result data 123 (cluster transition probability data 1235 included in the simulation result data 123, as will be described below).

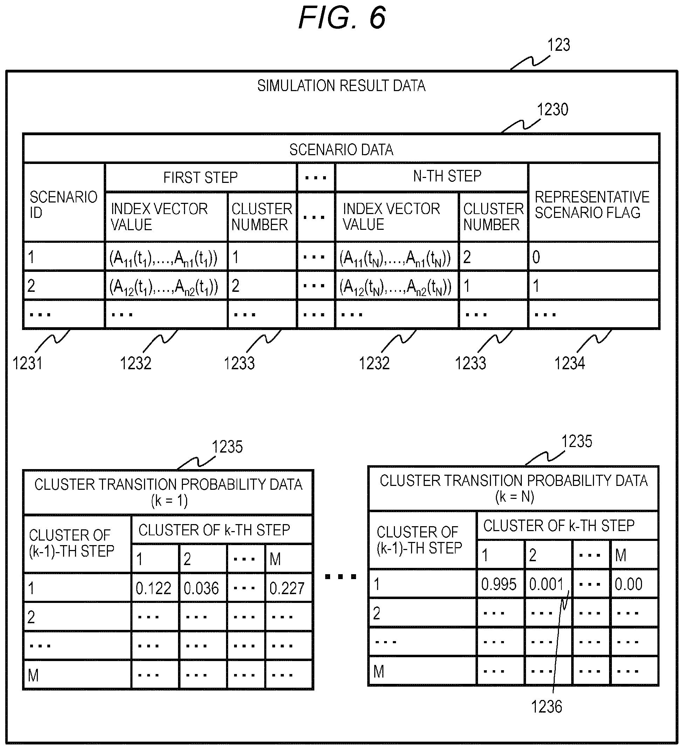

FIG. 6 is a diagram illustrating an example of the simulation result data 123. The simulation result data 123 includes, for example, the scenario data 1230 and the cluster transition probability data 1235 for each number of steps.

The scenario data 1230 includes, for example, a scenario ID field 1231, an index vector value field 1232 for each step, a cluster number field 1233 for each step, and a representative scenario flag field 1234.

The scenario ID field 1231 stores a scenario ID. The index vector value field 1232 for each step stores an index vector value of each scenario in the step. The cluster number field 1233 for each step stores a cluster number of a cluster to which the index vector value of each scenario in the step belongs. The representative scenario flag field 1234 stores a representative scenario flag representing whether each scenario is the representative scenario (1 is stored when the scenario is the representative scenario, and 0 is stored when the scenario is not the representative scenario).

For k = 1, ..., N, the cluster transition probability data 1235 represents a transition probability from each cluster of the (k - 1)-th step to each cluster of the k-th step. Specifically, for example, a record 1236 represents that an index vector belonging to the cluster of which the cluster number is 1 in the (N - 1)-th step transitions to a cluster of which the cluster number is 2 in the N-th step at a probability of 0.1%.

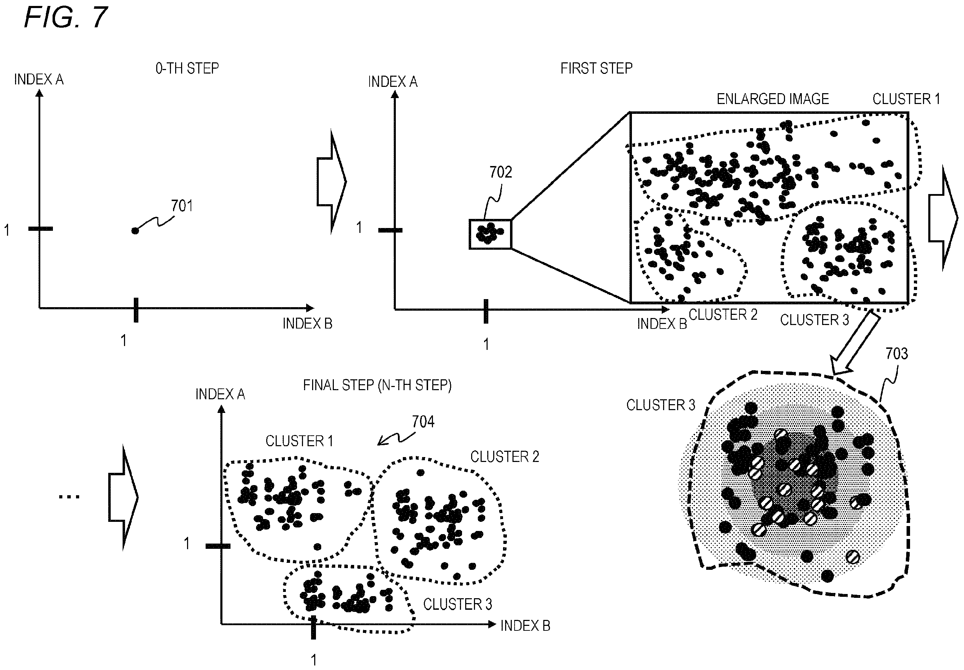

FIG. 7 is an explanatory diagram illustrating an example of the simulation process. In the example of FIG. 7, an index vector is composed of indexes A and B. In the 0-th step of the simulation process, only one scenario composed of only (1, 1) that is an initial value 701 of the index vector is obtained.

When the process of step S505 in the first step is executed, an index vector group 702 composed of L index vectors of the first step is obtained, that is, L scenarios until the first step are obtained. Since each index vector group 702 in the first step is a group minutely changed from the initial value 701, each index vector group 702 is concentrated near the initial value 701.

When the process of step S506 in the first step is executed, the index vectors included in the index vector group 702 are clustered (here, it is assumed that the index vectors are clustered into three clusters including a cluster of which the cluster number is 1, a cluster of which the cluster number is 2, and a cluster of which the cluster number is 3).

The process of step S507 is executed for each cluster of the first step. For example, when the process of step S507 is performed on the cluster of which the cluster number is 3, resampling is executed on an index vector group 703 belonging to the cluster of which the cluster number is 3. In the resampling, a probability of the selection (resampling) is preferably set to be higher for an index vector (scenario) closer to the center of gravity of the cluster of which the cluster number 3. Here, while one index vector (scenario) is selected a plurality of times, there is an index (scenario) which is not selected. Among dots illustrated in the index vector group 703, dots filled with diagonal lines indicate resampled dots, and black dots indicate index vectors which are not resampled.

By executing the processes of steps S504 to S509 in each time step, it is possible to obtain an index vector group 704 (resampled scenarios) of the final step (N-th step). As the time step progresses, a change from the initial value 701 of the index vector increases. Therefore, for example, dispersion of the index vector group 704 of the N-th step is large and a difference between the clusters is also large, compared to the index vector group 702 of the first step. For each cluster of the index vector group 704 of the final step, the process of step S510 is executed, and a representative scenario is selected from each cluster.

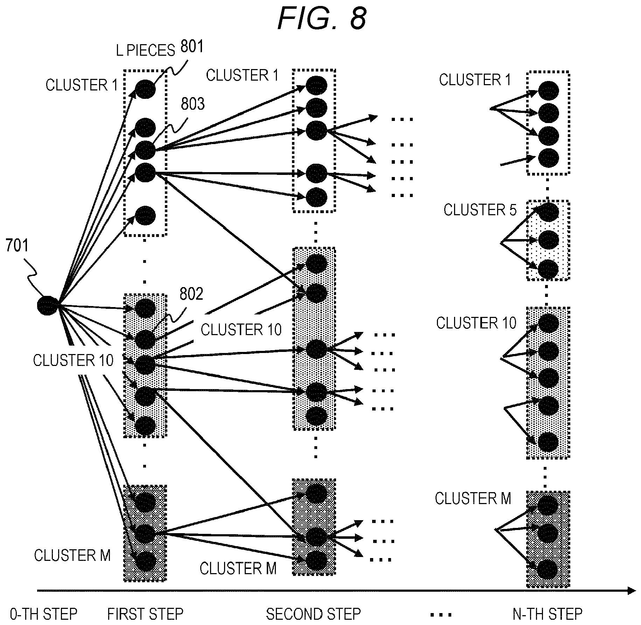

FIG. 8 is an explanatory diagram illustrating an example of the simulation process. Each dot in FIG. 8 represents an index vector in each step, and a time sequence of the index vectors connected by arrows between the time steps represents a scenario. As described in FIG. 7, only one scenario formed by only (1, 1) that is the initial value 701 of the index vector is obtained in the 0-th step of the simulation process.

As described above, when the process of step S505 in the first step is executed, L scenarios until the first step are obtained. As described above, when the process of step S506 in the first step is executed, the index vectors included in the index vector group of the first step are clustered (here, it is assumed that the index vectors are clustered to M clusters of which the cluster numbers are 1 to M) .

When the process of step S507 is executed for each cluster of the first step, the index vectors (scenarios) are resampled. Among the index vectors of the first step, an index vector serving as a starting point of an arrow is an index vector which is a resampling target, and an index vector not serving as a starting point of an arrow is an index vector which is not the resampling target. There is an index vector which is not the resampling target like an index vector 801. There is an index vector which is the resampling target and is selected only once as a starting point of a subsequent step (third step) like an index vector 802. There is an index vector which is the resampling target and is selected a plurality of times as a starting point of a subsequent step (third step) like an index vector 803.

By executing the foregoing process in each time step, the scenarios obtained in the final step can be resampled for each cluster. By executing the foregoing clustering process or the resampling process in the foregoing simulation process, it is possible to generate various scenarios with high prediction accuracy while reducing a calculation load of the simulation system 100.

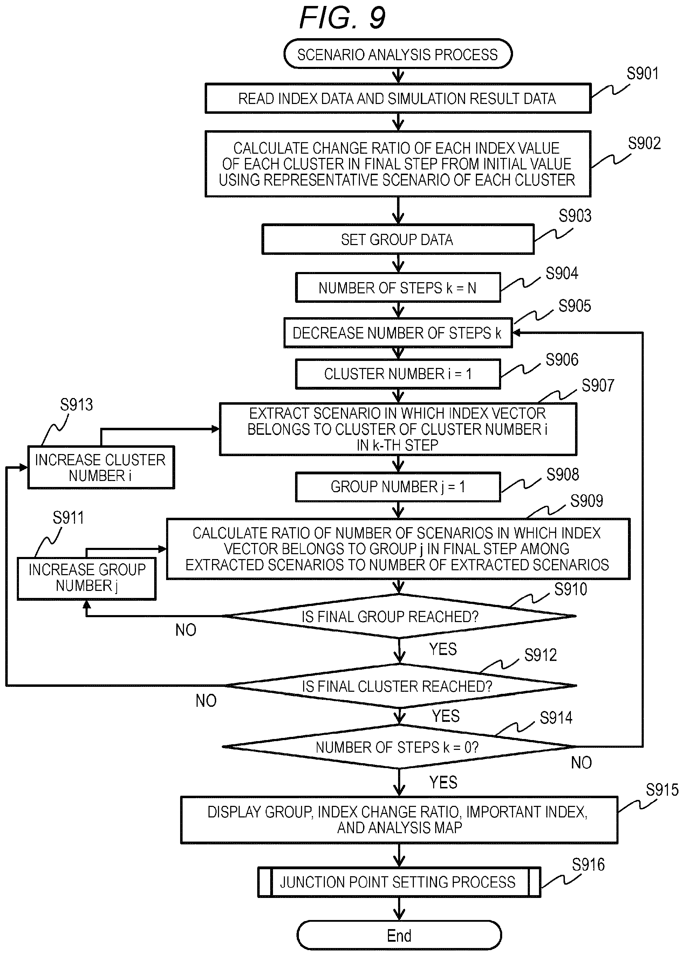

FIG. 9 is a flowchart illustrating an example of the scenario analysis process. The scenario analysis unit 112 reads the index data 121 and the simulation result data 123 (S901). The scenario analysis unit 112 calculates a change ratio of each index value in the final step from the initial value for the representative scenario of each cluster and registers the change ratio in the index change ratio data 124 (S902).

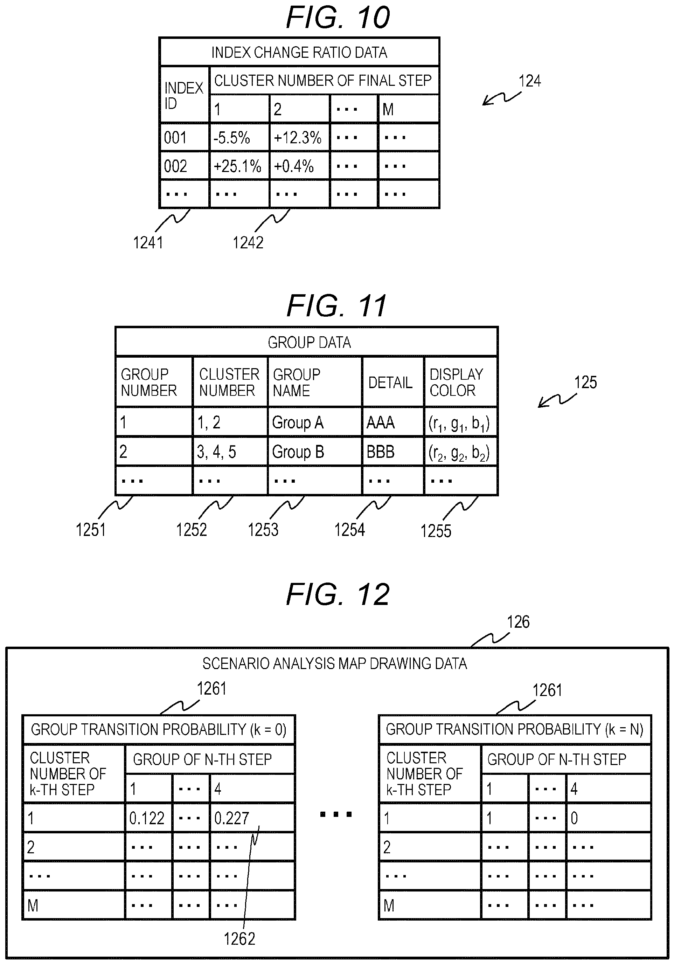

FIG. 10 is a diagram illustrating a data configuration example of the index change ratio data 124. The index change ratio data 124 includes, for example, an index ID field 1241 and an index change ratio field 1242. The index ID field 1241 stores the index ID. The index change ratio data 1242 stores a value indicating a change ratio of each index value for each cluster of the final step from the initial value.

FIG. 9 is referred to for description. For example, the scenario analysis unit 112 sets the group data 125 based on, for example, an input from the user through the input device 105 (S903).

FIG. 11 is a diagram illustrating a data configuration example of the group data 125. The group data 125 includes, for example, a group number field 1251, a cluster number field 1252, a group name field 1253, a detail field 1254, and a display color field 1255.

The group number field 1251 stores a group number for identifying a group. The cluster number field 1252 stores a cluster number of a cluster belonging to the group (in the final step).

For example, one cluster or clusters with continuous cluster numbers belongs to each group, and a cluster with a smaller cluster number belongs to a group with a smaller group number. Accordingly, in step S903, for example, the scenario analysis unit 112 may determine one position or a plurality of positions dividing the cluster numbers listed in an ascending order according to an input from the input device 105 and may generate a group by segmentation at the determined positions. As described above, a closer cluster number is assigned as a distance between the clusters is closer. Therefore, the group is generated according to the method, and thus the clusters in which the distance is close belong to the same group, and a group with a closer number is a group in which the distance between the clusters is closer.

The detail field 1254 stores information indicating detailed description or the like of the group. A value stored in the detail field 1254 is determined, for example, according to an input from the input device 105 in step S903. The display color field 1255 stores information indicating a display color (for example, RGB values) of each group in a scenario analysis map to be described below. In step S903, the scenario analysis unit 112 determines a display color of each group by, for example, determining the number of groups according to an input from the input device 105 and disposing the groups of the determined group number at positions equally distant from each other on a color space (a distance between the groups on the color space is a predetermined value or more).

FIG. 9 is referred to for description. The scenario analysis unit 112 sets the number of (time) steps k to N (that is, the final step) (S904). The scenario analysis unit 112 decreases (by 1) the number of steps k (S905). The scenario analysis unit 112 sets a cluster number i to 1 (S906). The scenario analysis unit 112 extracts a scenario in which the index vector belongs to the cluster of the cluster number i in the k-th step with reference to the simulation result data 123 (S907). The scenario analysis unit 112 sets a group number j to 1 (S908).

The scenario analysis unit 112 calculates a ratio of the number of scenarios in which the index vector in the final step belongs to the group with the group number j among the extracted scenarios, to the number of scenarios extracted in the process of the immediately previous step S907 (that is, a probability at which the index vector belonging to the cluster with the cluster number i in the k-th step transitions to the cluster included in the group with the group number j in the final step), and stores the ratio in the scenario analysis map drawing data 126 (S909).

Specifically, for example, in step S909, the scenario analysis unit 112 may transition any cluster from a (k + 1)-th step to an (N - 1)-th step by setting the cluster with the cluster number j of the k-th step as a starting point with reference to each cluster transition probability data 1235 from the k-th step to the final step (N-th step) and may calculate a transition probability of the cluster in which the cluster included in the group with the group number j of the N-th step is an ending point.

For example, in step S909, at k = N - 1, the scenario analysis unit 112 may acquire transition probabilities at which the clusters with the cluster number i of the (N - 1)-th step transition to any cluster included in the group with the group number j in the N-th step from the cluster transition probability data 1235 and may calculate a sum of the acquired transition probabilities.

For example, in step S909, at k = N - 2 or less, the scenario analysis unit 112 acquires transition probabilities at which the clusters with the cluster number i of the k-th step transition to a cluster with a cluster number h in the (k + 1)-th step for all cluster numbers h from the cluster transition probability data 1235. The scenario analysis unit 112 may calculate products of transition probabilities at which the clusters with the cluster number i of the k-th step transition to the clusters with the cluster number h in the (k + 1)-th step and transition probabilities of the clusters in which the clusters with the cluster number h of the (k + 1)-th step serve as starting points (any cluster transitions from a (k + 2)-th step to an (N - 1)-th step) and the clusters included in the group with the group number j of the N-th step serve as ending points for all the cluster numbers h, and may calculate a total sum of the calculated products.

Since no clustering is executed at the 0-th step, for example, the index vector (that is, the initial value) in the 0-th step may be treated as belonging to a predetermined cluster (for example, a cluster with the cluster number 1).

The scenario analysis unit 112 determines whether the group number j reached the final group number (S910). When the scenario analysis unit 112 determines that the group number j did not reach the final group number (NO in S910), the group number j increases (S911) and the process returns to step S909.

When the scenario analysis unit 112 determines that the group number j reached the final group number (YES in S910), the scenario analysis unit 112 determines whether the cluster number i reached the final cluster number (S912). When the scenario analysis unit 112 determines that the cluster number i did not reach the final cluster number (NO in S912), the cluster number i increases (S913) and the process returns to step S907.

When the scenario analysis unit 112 determines that the cluster number i reached the final cluster number (YES in S912), The scenario analysis unit 112 determines whether the number of steps k reached 0 (S914). When the scenario analysis unit 112 determines that the number of steps k did not reach 0 (NO in S914), the process returns to step S905.

When the scenario analysis unit 112 determines that the number of steps k reached 0 (YES in S914),the screen generation unit 115 displays a scenario analysis result display screen including the group set in step S902, the index change ratio calculated in step S902, the important index set in the index data 121, the analysis map which is based on the scenario analysis map drawing data 126 and the like on the output device 106 (S915). The junction point setting unit 113 executes a junction point setting process (S916) and ends the scenario analysis process. Details of the junction point setting process will be described below.

As will be described in detail, an instruction to reset the group (for example, reset the number of groups or the clusters belonging to the group) can be received according to an input from the input device 105 on the scenario analysis result display screen displayed in step S915. When the instruction to reset the group is received, the processes of steps S903 to S915 are executed based on the instruction.

FIG. 12 is a diagram illustrating a data configuration example of the scenario analysis map drawing data 126. The scenario analysis map drawing data 126 includes, for example, group transition probability data 1261 for each number of steps. The group transition probability data 1261 represents the transition probability of the cluster which is calculated in step S909 for k = 0, ..., N and in which each cluster of the k-th step serves as the starting point (any cluster transitions from the (k + 1)-th step to the (N - 1)-th step), and the cluster included in each group of the N-th step serves as the ending point.

Specifically, for example, a record 1262 represents transition of an index vector belonging to the cluster of which the cluster number is 1 in the 0-th step to any cluster included in the group of which the group number is 4 in the N-th step at a probability of 22.7%. In the scenario analysis process illustrated in FIG. 9, description of the process of calculating the group transition probability data 1261 at k = N was omitted, but in the group transition probability data 1261 at k = N, 1 is stored as a transition probability corresponding to the group to which the cluster with the cluster number belongs, and 0 is stored as a transition probability corresponding to other groups for each cluster number.

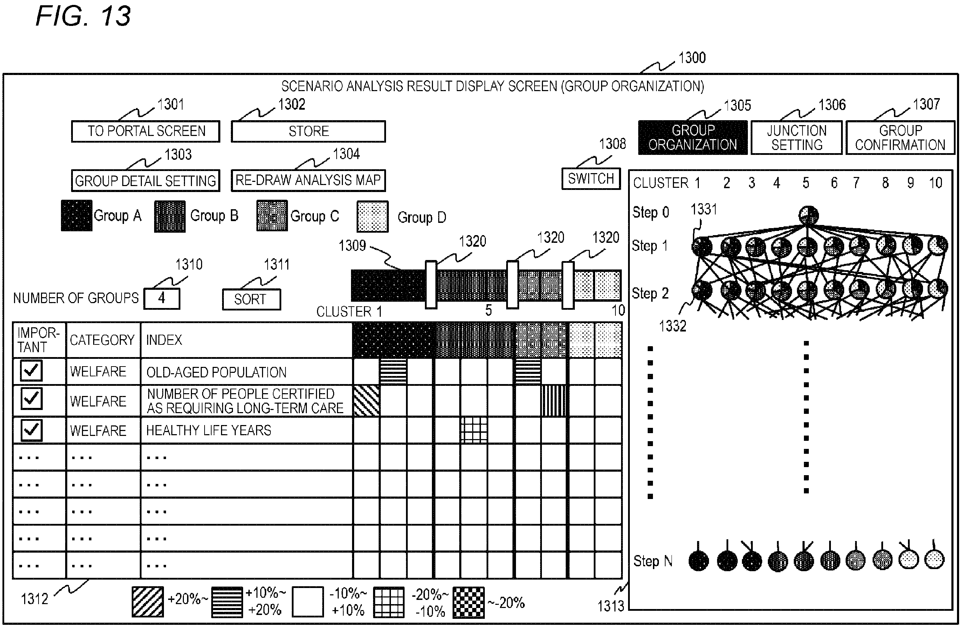

FIG. 13 is a diagram illustrating a screen configuration example of a scenario analysis result display screen (group organization). A scenario analysis result display screen 1300 in a state in which a group organization is selected includes, for example, buttons 1301 to 1308, a group setting region 1309, a number-of-groups input region 1310, a button 1311, an index display region 1312, and an analysis map display region 1313.

When the button 1301 is selected, the screen transitions to the portal screen 200 of FIG. 2. When the button 1302 is selected, information regarding a group which is being set is stored in the group data 125. When the button 1303 is selected, a region where a detailed setting of the group (for example, a value registered in the group name field 1253 or the detail field 1254 of the group data 125) is input is displayed in, for example, a pop-up manner or the like.

When the button 1304 is selected, the processes of steps S904 to S916 are executed again based on the information regarding the group which is being set, and an analysis map corresponding to the group is displayed in the analysis map display region 1313. When the button 1305 is selected, the scenario analysis result display screen 1300 (the screen of FIG. 13) in which the group organization is possible is displayed. When the button 1306 is selected, the screen transitions to a scenario analysis result display screen (junction setting) to be described below. When the button 1307 is selected, the screen transitions to a scenario analysis result display screen (group confirmation) to be described below.

When the button 1308 is selected, units of displays of the time step in the analysis map displayed in the analysis map display region 1313 can be changed. For example, when one time step is one month and the button 1308 is selected, units of displays of the time step in the analysis map displayed in the analysis map display region 1313 can be switched to one of one month or one year.

The group setting region 1309 is a region for setting a group. In the group setting region 1309, a plurality of squares indicating clusters (in the final step) and separators 1320 (the number of separators is (the number of groups - 1)) according to the number of groups set in the number-of-groups input region 1310 are displayed.

The plurality of squares represent clusters corresponding to cluster numbers in an ascending order from the left, and clusters corresponding to the squares segmented by the separators 1320 (the number of clusters is 10 in the example of FIG. 13) form a group. For example, groups are formed such that clusters corresponding to the square located to the left of the separator 1320 located at the leftmost belong to the group of which the group number is 1, clusters corresponding to the square located between a separator 1320 located i-th from the left (where i is an integer of 1 or more and less than the number of set groups j) and a separator 1320 located (i + 1)-th from the left belong to a group of which a group number is (i + 1), and clusters corresponding to the square located to the right of the separator 1320 located at the rightmost belong to the group of which a group number is j.

That is, in the example of FIG. 13, the clusters of which the cluster numbers are 1 to 3 belong to the group of which the group number is 1 (group name "Group A"), the clusters of which the cluster numbers are 4 to 6 belong to the group of which the group number is 2 (group name "Group B"), the clusters of which the cluster numbers are 7 and 8 belong to the group of which the group number is 3 (group name "Group C"), and the clusters of which the cluster numbers are 9 and 10 belong to the group of which the group number is 4 (group name "Group D").

By moving a position of each separator 1320 according to an input to the input device 105, it is possible to change the clusters included in each group. The square corresponding to each group is displayed in a display color indicated by the display color field 1255 of the group data 125.

The number-of-groups input region 1310 is a region where the number of groups is input. As described above, the number of groups and the number of separators 1320 are changed according to a numeral value input to the number-of-groups input region 1310. When the button 1311 is selected, indexes displayed in the index display region 1312 are sorted (so that important indexes are displayed above, for example).

In the index display region 1312, for example, a check box of an important index flag, an index category name, an index name, and an index change region of each cluster indicated by the index change ratio data 124 (in the final step in which the 0-th step is a reference) are displayed. According to an input to the input device 105, a check of the check box of the important index flag can be added or excluded, and a change result of the check of the check box is reflected in the index data 121.

In the index display region 1312, the index change ratio is displayed in a matrix in which the horizontal axis represents each cluster and the vertical axis represents each index, and an important index is displayed above the matrix, so that a group can be set appropriately while confirming a change ratio of an index regarded important by a user. In the example of FIG. 13, "Old-Aged Population" which is an important index belonging to an index category name "Welfare" indicates that there is a change of + 10% to + 20% in the clusters of which the cluster numbers are 2 and 7, and there is a change of - 10% to + 10% in the other clusters.

An analysis map for analyzing a scenario is displayed in the analysis map display region 1313. The analysis map includes a circular graph corresponding to each cluster of each step (for simplicity, circular graphs other than the circular graphs of the 0-th step, the first step, the second step, and the N-th step are not illustrated in FIG. 13, but the circular graphs of all the steps are displayed in practice).

The circular graph of each step represents a group transition probability corresponding to the step indicated by the scenario analysis map drawing data 126. That is, for example, a circular graph 1331 represents a group transition probability corresponding to the cluster number 1 of the first step (that is, a probability of transitioning to each group in the final step when the cluster of with cluster number 1 of the first step serves as a starting point) in the scenario analysis map drawing data 126.

Each group transition probability in the circular graph is displayed with a display color corresponding to the group and an area according to the group transition probability in the group data 125. When each cluster of each time step serves as a starting point in the circular graph in the analysis map display region 1313, the user can easily ascertain to which group the index vector transitions in the final step.

The example in which a specific value of the group transition probability is indicated with an area of the circular graph has been described, but a transmissible group in the final step may be recognized without indicating a specific value of the group transition probability (for example, when the transition to one of the groups with group numbers of 1 and 2 in the final step is possible, a circular graph bisected by a display color of group number of 1 and a display color of group number of 2 regardless of the group transition probability may be displayed, for example).

For example, when the index vector corresponding to cluster number 1 of the first step can transition to the cluster with cluster number 1 of the second step, the clusters which are likely to transition between the time steps are indicated as connected relations in the analysis map so that circular graphs 1331 and 1332 are connected by straight lines (with a color unused as a display color of a group, for example) or the like. Accordingly, the user can easily ascertain an aspect of the transition of the index vector between the time steps.

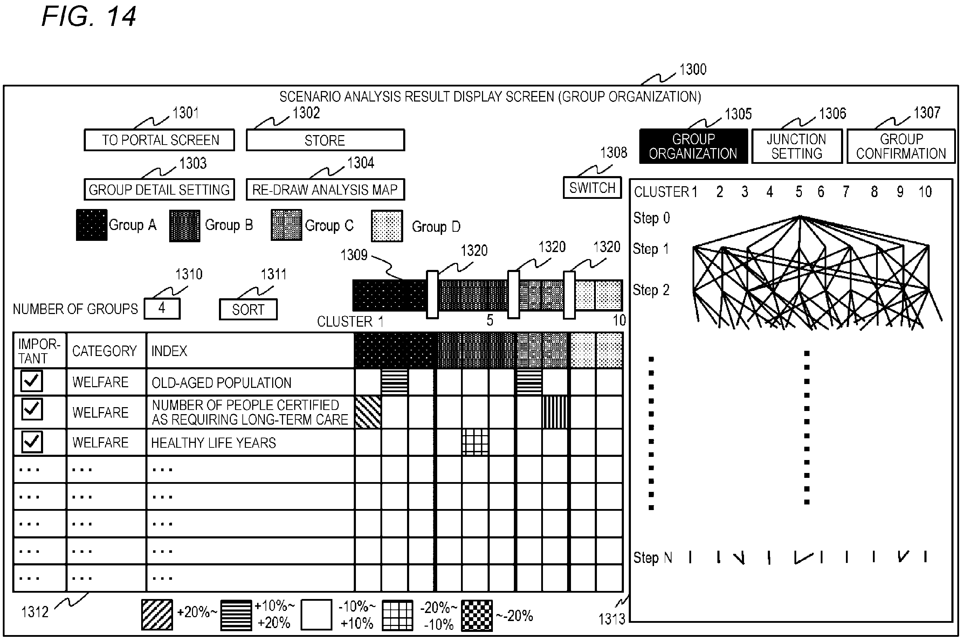

FIG. 14 is a diagram illustrating another screen configuration example of the scenario analysis result display screen (group organization). The scenario analysis result display screen 1300 of FIG. 14 is similar to that of FIG. 13 except for display in the analysis map display region 1313. The analysis map display region 1313 of FIG. 14 is different from FIG. 13 in that the circular graph of each cluster of each step is not displayed and only straight lines indicating connection relations between the clusters between the time steps are displayed.

By displaying the display colors of the straight lines in the analysis map display region 1313 of FIG. 14 in a mixed color according to a group transition probability, the user can visually ascertain the group transition probability. Specifically, for example, when probabilities at which the index vectors belonging to the cluster with cluster number 1 of the first step transition to the groups with group number 1, group number 2, group number 3, and group number 4 are 40%, 30%, 20%, and 10%, respectively, and display colors of the groups with group number 1, group number 2, group number 3, and group number 4 are (r₁, g₁, b₁), (r₂, g₂, b₂), (r₃, g₃, b₃), and (r₄, g₄, b₄), respectively, the straight lines connected from the clusters with cluster number 1 of the first step to the clusters of the second step in the analysis map display region 1313 are displayed with colors in which (r₁, g₁, b₁) is mixed at a ratio of 40%, (r₂, g₂, b₂) is mixed at a ratio of 30%, (r₃, g₃, b₃) is mixed at a ratio of 20%, and (r₄, g₄, b₁) is mixed at a ratio of 10%.

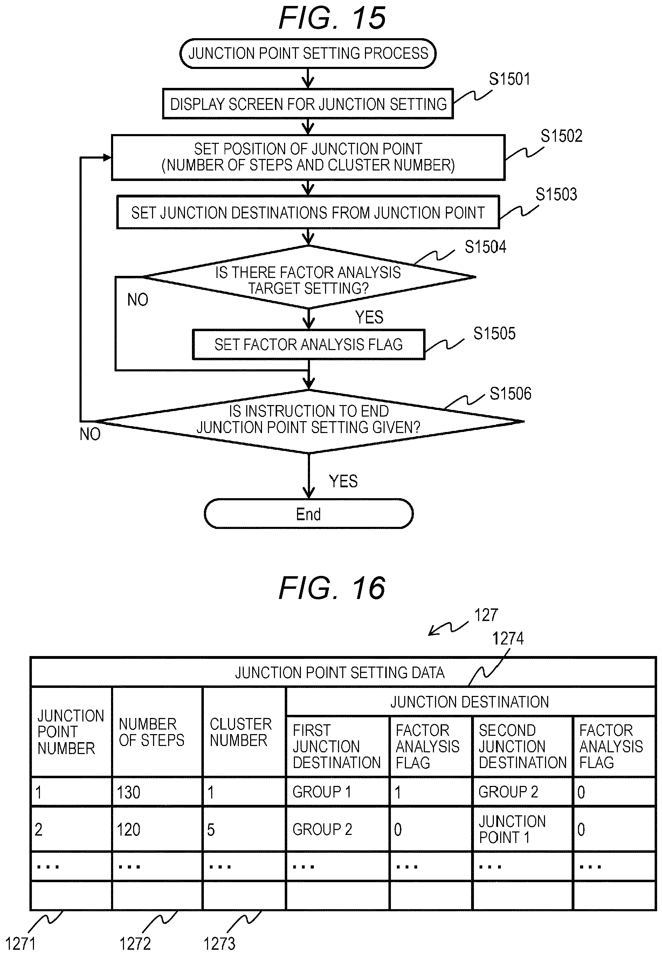

FIG. 15 is a flowchart illustrating an example of the junction point setting process in step S917. For example, when the button 1306 is selected, the screen generation unit 115 displays a screen for junction setting (scenario analysis result display screen (junction setting)) on the output device 106 (S1501). Details of the screen for junction setting will be described below. The junction point setting unit 113 sets a position of a junction point in the junction point setting data 127 (S1502). Specifically, for example, the junction point setting unit 113 receives an input of the number of time steps and a cluster number (for example, the cluster with cluster number 3 of the tenth step) through the input device 105 and sets the position of the junction point according to the input.

The junction point setting unit 113 sets a plurality of junction destinations from the junction point in the junction point setting data 127 (S1503). Specifically, for example, the junction point setting unit 113 receives an input of junction points set in the time steps after the junction point or the group of the final step (that is, the group set in the group data 125) through the input device 105 and sets each of the plurality of junction destinations according to the input. The plurality of junction destinations from the junction point may all be junction points set in the time steps after the junction point, may all be a group in the final step, or may include both the junction points set in the time steps after the junction point and the group in the final step.

The junction point setting unit 113 determines whether an input of a setting indicating a factor analysis target for at least one of the plurality of junction destinations from the junction point is received through the input device 105 (S1504). When it is determined that the factor analysis target setting is received (YES in S1504), the junction point setting unit 113 sets a factor analysis flag "1" in the junction destination of the factor analysis target setting in the junction point setting data 127 (S1505).

The junction point setting unit 113 transitions to the process of step S1506 when it is determined that the factor analysis target setting is not received (NO in S1504). The junction point setting unit 113 determines whether an instruction to end the junction point setting is received through the input to the input device 105 (S1506). When it is determined that the instruction to end the junction point setting is not received (NO in S1506), the junction point setting unit 113 returns to step S1502. When it is determined that the instruction to end the junction point setting is received (YES in S1506), the junction point setting unit 113 ends the junction point setting process (the screen generation unit 115 ends the display of the screen for the junction setting).

FIG. 16 is a diagram illustrating a data configuration example of the junction point setting data 127. The junction point setting data 127 includes, for example, a junction point number field 1271, a number-of-steps field 1272, a cluster number field 1273, and a junction destination field 1274. The junction point number field 1271 stores a junction point number for identifying a junction point. The junction point number is assigned by, for example, the junction point setting unit 113 in step S1502.

The number-of-steps field 1272 and the cluster number field 1273 store the number of time steps and a cluster number for specifying a position of the junction point, respectively. The junction destination field 1274 stores information indicating the plurality of junction destinations from the junction point and a factor analysis flag for each junction destination. In the example of FIG. 16, two junction destinations are generated from one junction point, but three or more junction destinations may be generated from one junction point.

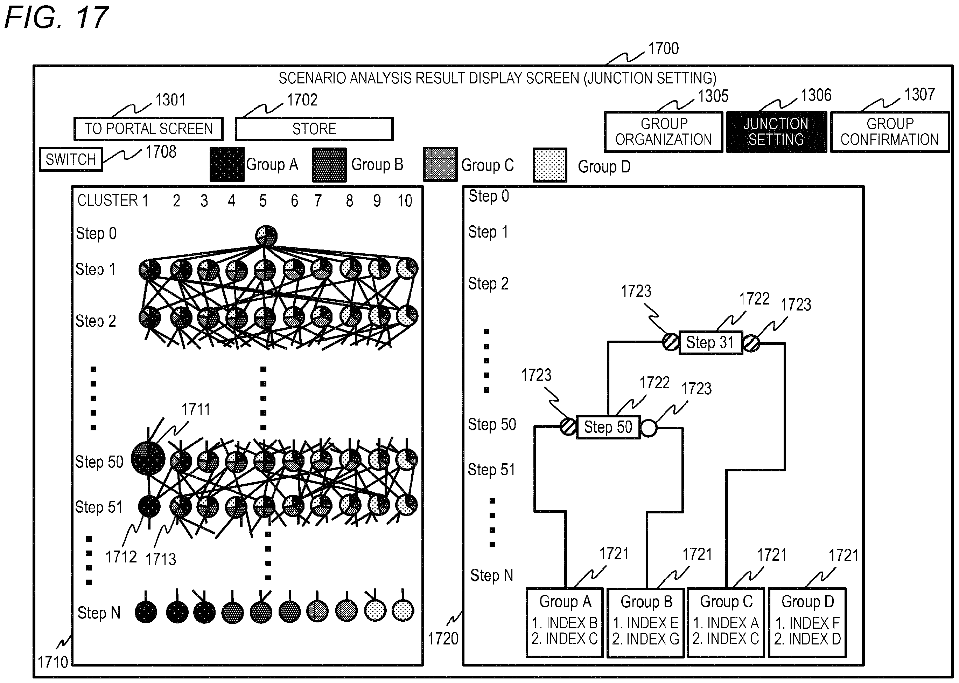

FIG. 17 is a diagram illustrating a screen configuration example of the scenario analysis result display screen (junction setting) in a state in which the junction setting is selected. On the screen of FIG. 17, display is started in step S1502.

A scenario analysis result display screen 1700 includes, for example, the button 1301 and the buttons 1305 to 1307 same as those in the scenario analysis result display screen 1300 of FIG. 13 and further includes a button 1702, a button 1708, a junction point selection region 1710, and a junction destination selection region 1720.

When the button 1702 is selected, information regarding the junction point which is being set is stored in the junction point setting data 127. When the button 1708 is selected, units of displays of the time step in the analysis map displayed in the junction point selection region 1710 can be changed. For example, when one time step is one month and the button 1708 is selected, the units of displays of the time step in the analysis map displayed in the junction point selection region 1710 are switched to one of one month or one year.

An analysis map similar to that of the analysis map display region 1313 of FIG. 13 is displayed in the junction point selection region 1710. An analysis map similar to that of the analysis map display region 1313 of FIG. 14 may be displayed in the junction point selection region 1710.

For example, when a circular graph in the junction point selection region 1710 is selected according to an input through the input device 105, a time step and a cluster corresponding to the circular graph are selected as a junction point. In FIG. 17, when the circular graph 1711 is selected as a junction point, display is emphasized such that a display size of the selected circular graph 1711 is increased compared to other circular graphs (or lightness may be raised or a display color may be changed).

According to the circular graph 1711, a scenario in which the index vector belongs to the cluster with cluster number 1 of a fiftieth step can transition to a cluster with cluster number 1 or cluster number 2 in a subsequent fifty-first step and can transition to "Group A" or "Group B" in the final step. According to a circular graph 1712, a scenario in which the index vector belongs to the cluster with cluster number 1 of the fifty-first step can transition to only "Group A" in the final step. According to a circular graph 1713, a scenario in which the index vector belongs to the cluster with cluster number 1 of the fifty-first step can transition to all the groups in the final step.

That is, depending on whether the index vector of the cluster with cluster number 1 of the fiftieth step transitions to the cluster with cluster number 1 or cluster number 2 in the fifty-first step, the transition option in the final step is changed to only "Group A" or all the groups. Accordingly, the circular graph 1711 can serve as a junction point important for the user. When such an analysis map is displayed in the junction point selection region 1710, the user easily ascertain the junction point important for the user like the cluster indicated by the circular graph 1711.

For example, a group information display region 1721, a junction point display 1722, and a factor analysis target setting button 1723 are displayed in the junction destination selection region 1720. For example, a name of each group, details, clusters included in each group, and the like are displayed in the group information display region 1721. In the group information display region 1721, names of indexes (which may be, for example, a predetermined number of indexes in an order of a high change ratio or may be indexes with a change ratio equal to or greater than a predetermined value) with higher change ratio (which may be an increase ratio or a decrease ratio) from initial values in each group may be displayed or names of indexes designated by an input from the user in each group may be displayed. The change ratio of the index from the initial value in each group is calculated by an average or the like of changes from initial values of the indexes of the scenarios belonging to the group.

When the circular graph in the junction point selection region 1710 is selected and thus a junction point is selected, the junction point display 1722 is displayed at the position of the time step corresponding to the junction point in the junction destination selection region 1720. In the example of FIG. 17, the junction point display 1722 described as "Step 50" is a junction point corresponding to the circular graph 1711 selected in the junction point selection region 1710.

When the junction point display 1722 is displayed, junction destinations (that is, junction points or a group in the final step set in the time step after the junction point) can be set through an input to the input device 105 in the junction destination selection region 1720.

In the example of FIG. 17, for a junction point indicated by the junction point display 1722 described as "Step 50", a group with a name "Group A" and a group with a name "Group B" are set as junction destinations. In the junction destination selection region 1720, the junction point display 1722 and the selected junction destination are connected by a broken line.

In the example of FIG. 17, for a junction point indicated by the junction point display 1722 described as "Step 31", a junction point indicated by the junction point display 1722 described as "Step 50" and a group with the name "Group C" are set as junction destinations. By the display of the junction destination selection region 1720, the user can set appropriate junction destinations and can also ascertain connection relations between the junction destination and the junction point.

When the junction destinations are set for the junction point display 1722, the factor analysis target setting button 1723 for each junction destination of the junction point display 1722 is displayed. When the factor analysis target setting button 1723 is selected through an input to the input device 105 (in the example of FIG. 17, the factor analysis target setting button 1723 filled with diagonal lines is being selected and the blank factor analysis target setting button 1723 is not being selected), the factor analysis flag for the junction destination of the junction point is set to "1".

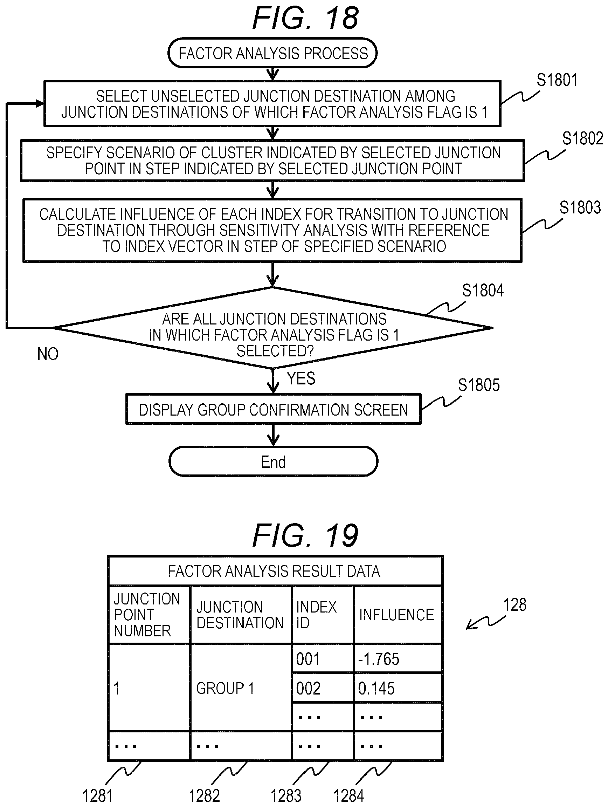

FIG. 18 is a flowchart illustrating an example of the factor analysis process. The factor analysis unit 114 selects one junction destination unselected in the factor analysis process among the junction destinations in which the factor analysis flag indicated by the junction point setting data 127 is "1" (S1801). The factor analysis unit 114 specifies a scenario in which the index vector belongs to the cluster of the number of time steps and the cluster number corresponding to the junction point setting data 127 for the selected junction destination (S1802).

The factor analysis unit 114 calculates an influence of each index for shifting to the junction destination by executing sensitivity analysis using the index vector in the time step as a reference in the specified scenario and registers a calculation result in the factor analysis result data 128 (S1803). Specifically, for example, the factor analysis unit 114 minutely changes (for example, less than a predetermined value) the value of the index of the index vector in the time step in each of the specified scenarios for each index and calculates a probability at which the index vector of the specified scenario transitions to the junction destination corresponding to the factor analysis flag. Between cases where the value of the index is minutely changed and when the value of the index is not changed, the factor analysis unit 114 calculates a change amount of the probability (or a value or the like obtained by substituting the change amount into a predetermined increasing function) at which the index vector of the specified scenario transitions to the junction destination corresponding to the factor analysis flag as the importance of the index.

In the foregoing example, the factor analysis unit 114 executes the sensitivity analysis by minutely changing each index value of each scenario specified in step S1802, but the sensitivity analysis may be executed by selecting a scenario having an index vector closest to the center of gravity of the cluster among the scenarios specified in step S1802 and minutely changing each index value in a plurality of patterns for the selected scenario. The factor analysis unit 114 may calculate the importance on the important index.

The factor analysis unit 114 determines whether all the junction destinations in which the factor analysis flag indicated by the junction point setting data 127 is "1" were selected (S1804). When the factor analysis unit 114 determines that there is an unselected junction destination among the junction destinations in which the factor analysis flag is "1" (NO in S1804), the process returns to step S1801. When the factor analysis unit 114 determines that all the junction destinations in which the factor analysis flag is "1" were selected (YES in S1804), the screen generation unit 115 displays a screen for group confirmation to be described below (scenario analysis result display screen (group confirmation)) on the output device 106 and ends the factor analysis process.

FIG. 19 is a diagram illustrating a data configuration example of the factor analysis result data 128. The factor analysis result data 128 includes, a junction point number field 1281, a junction destination field 1282, an index ID field 1283, and an influence field 1284. The junction point number field 1281 and the junction destination field 1282 each store information indicating a junction point number and a junction destination of a junction point which is a factor analysis target. The index ID field 1283 stores the index ID. The influence field 1284 stores the influence of each index for transitioning to the junction destination at the junction point.

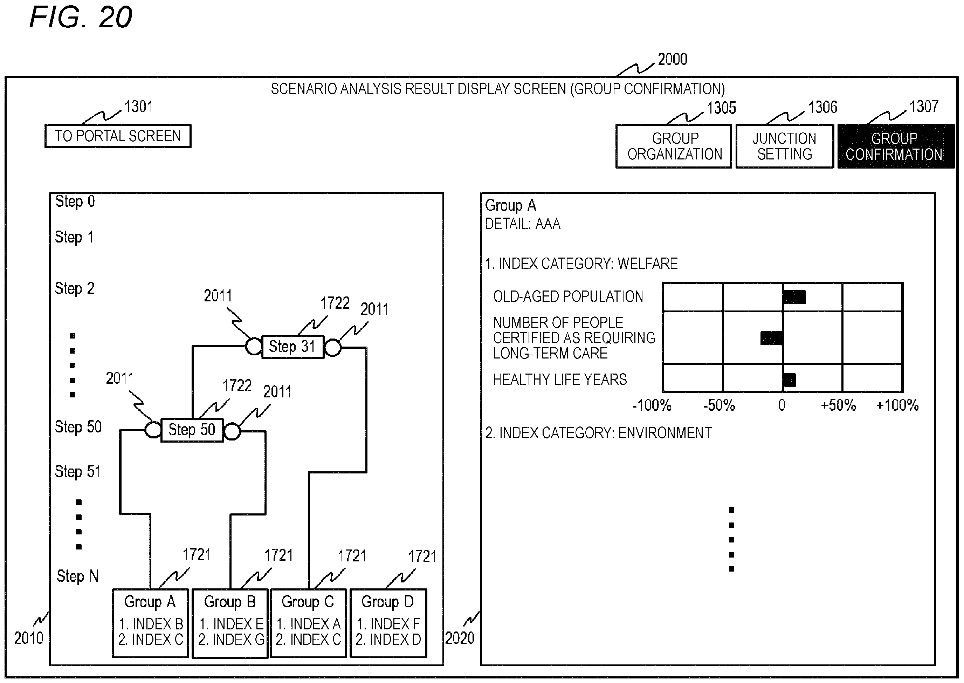

FIG. 20 is a diagram illustrating a screen configuration example of the scenario analysis result display screen (group confirmation) in a state in which the group confirmation is selected. A scenario analysis result display screen 2000 includes, for example, the button 1301 and the buttons 1305 to 1307 same as those in the scenario analysis result display screen 1300 of FIG. 13 and further includes a junction display region 2010 and an index display region 2020.

In the junction display region 2010, for example, the group information display region 1721 and the junction point display 1722 same as those in the junction destination selection region 1720 of FIG. 17 are displayed, and the set junction point and the junction destinations are connected by broken lines. In the junction display region 2010, a factor analysis result display button 2011 is displayed.

When one group information display region 1721 is selected through an input to the input device 105, the index display region 2020 corresponding to the selected group is displayed. In the example of FIG. 20, the group information display region 1721 corresponding to the group with the name "Group A" is selected.

In the index display region 2020, for example, the name and detail of the group indicated by the group data 125 are displayed. In the index display region 2020, graphs indicating change ratios (for example, calculated by an average or the like of change ratios of the important indexes in the clusters included in the group as indicated by the index change ratio data 124) from the initial value of important indexes in the group (an index other than the important indexes may also be displayed) are displayed for each index category.

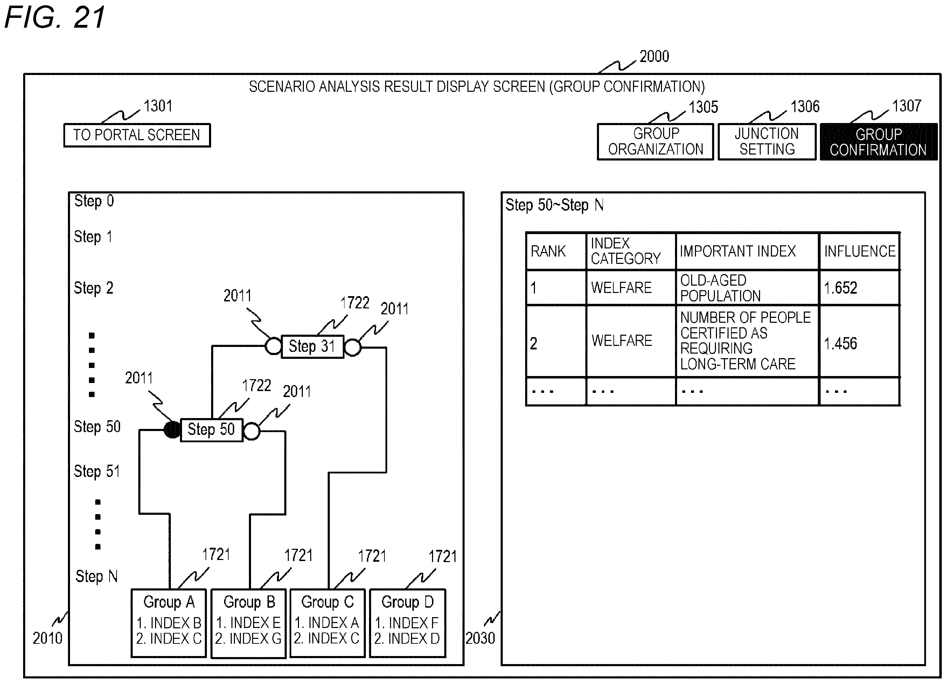

When the factor analysis result display button 2011 is selected through an input to the input device 105, the index display region 2020 is hidden and a factor analysis result display region illustrated in FIG. 21 is displayed.

FIG. 21 is a diagram illustrating another screen configuration example of the scenario analysis result display screen (group confirmation) in a state in which the group confirmation is selected. The scenario analysis result display screen 2000 of FIG. 21 is different from that of FIG. 20 in that the factor analysis result display button 2011 on the left side of the junction point of "Step 50" in the junction display region 2010 of the scenario analysis result display screen 2000 of FIG. 20 is selected, the selected factor analysis result display button 2011 is entirely painted black, the index display region 2020 is hidden, and a factor analysis result display region 2030 is displayed.

In the factor analysis result display region 2030, a factor analysis result of the junction point and the junction destination corresponding to the selected factor analysis result display button 2011, as indicated by the factor analysis result data 128, are displayed. Specifically, for example, index category names, index names, influences, and the like of a predetermined number of important indexes having higher influence (which may be important indexes of which the influence exceeds a predetermined value) are displayed among the important indexes corresponding to the junction point and the junction destination.

As described above, the simulation system 100 according to the embodiment can reduce a calculation load and generate appropriate and various scenarios by executing the clustering and the resampling of the scenarios in each time step of the simulation process.

In the Monte Carlo simulation, many scenarios are generated, but the simulation system 100 displays connection relations between the clusters which can transition in a subsequent step, a group transition probability in the final step expressed with a mixture of the circular graph or the display color, and the like for each cluster of each time step in the analysis map, and thus the user can easily set the junction points important for the user and can further execute the factor analysis related to the junction points and the junction destinations.

The present invention is not limited to the foregoing embodiments and various modifications can be made. For example, the foregoing embodiments have been described in detail to describe the invention easily, and all the described configurations may not necessarily be included. Some of the configurations of one embodiment can be replaced with configurations of another embodiment, and the configurations of the other embodiment can also be added to the configuration of one embodiment. Some of the configurations of each embodiment may be added to, deleted from, or replaced with other configurations.

Some or all of the foregoing configurations, functions, processing units, processing methods, and the like may be implemented by hardware by designing with, for example, integrated circuits. The foregoing configurations, functions, and the like may be implemented by software by causing a processor to interpret and execute programs that implement the functions. Information regarding programs, tables, files, and the like executing each function may be stored in a recording device such as a memory, a hard disk, or a solid state drive (SSD) or a recording medium such as an IC card, an SD card, or a DVD.

Control lines or information lines indicate lines considered to be necessary for description, but not all control lines or information lines necessary for a product are indicated. Actually, most of all the configurations may be connected to each other.

## Claims

1. A simulation system comprising a processor, a memory, and a display device, wherein
the memory stores simulation results representing a plurality of scenarios indicating index vectors of a plurality of time steps each generated by simulation and a plurality of clusters in which the index vectors of the plurality of scenarios in each of the plurality of time steps are classified, and
the processor
receives a setting for classifying the clusters of a final time step of the plurality of scenarios into a plurality of groups and executes classification based on the setting,
executes a scenario analysis process of calculating, for each of combinations of the time steps and the clusters, a transition probability at which the index vectors belonging to the cluster in the time step transition to each group in the final time step and a cluster in which the index vectors belonging to the cluster in the time step are transmissible in a subsequent step, and
displays an analysis map including a display representing the transition probability and a display representing the transmissible cluster on the display device for each of the combinations of the time steps and the clusters.

2. The simulation system according to claim 1, wherein the processor displays a circular graph in which the transition probability is indicated by an area ratio on the display device.

3. The simulation system according to claim 1, wherein
the memory stores information indicating a display color corresponding to each of the plurality of groups, and
the processor
calculates a mixed color in which the display colors corresponding to the plurality of groups are mixed based on the transition probability corresponding to each of the plurality of groups in each of the combinations of the time steps and the clusters, and
displays a display representing the transition probability with the mixed color on the display device.

4. The simulation system according to claim 1, wherein
the processor receives a setting of a junction point which is based on the combination of the time step and the cluster and a plurality of junction destinations corresponding to the junction point by selecting the display representing the transition probability for each of the combinations of the time steps and the clusters,
each of the plurality of junction destinations corresponding to the junction point is one of the plurality of groups in the final time step or one of junction points after the junction point, and
the processor displays a display representing the junction point and a display representing the plurality of junction destinations corresponding to the junction point on the display device.

5. The simulation system according to claim 4, wherein
the processor
receives a selection of the junction point and one of the plurality of junction destinations corresponding to the junction point,
executes a factor analysis process on the selected junction point and junction destination,
in the factor analysis process,
executes sensitivity analysis using the index vector at the junction point as a reference and calculates an influence of an index for shifting from the junction point to the junction destination, and
displays a display representing the calculated influence on the display device.

6. The simulation system according to claim 1, wherein
the memory stores
initial values of the index vectors, and
input information defined by an edge representing a casual relation between nodes which are indexes included in the index vectors, and
the processor
executes the simulation based on the initial values and the input information,
stores a result of the executed simulation in the simulation result,
in each time step of the simulation,
generates a plurality of index vectors in the time step based on index vector values in a time step immediately before the time step and the input information,
generates the plurality of clusters in the time step by clustering the plurality of generated index vectors based on a predetermined algorithm, and
resamples the scenarios by resampling the index vectors included in each of the plurality of generated clusters based on a predetermined algorithm.

7. The simulation system according to claim 1, wherein
the processor
receives a group change instruction for the clusters of the final time step of the plurality of scenarios included in the plurality of groups,
executes group resetting that classifies the final time step of the plurality of scenarios into the plurality of groups based on the group change instruction,
executes again the scenario analysis process on the plurality of groups set in the group resetting, and
displays the analysis map on the display device based on a result of the scenario analysis process.

8. The simulation system according to claim 7, wherein
the memory stores an initial value of each index included in the index vector, and
the processor
calculates a value representing a change ratio from the initial value of each index included in the index vector of the plurality of clusters of the final time step, and
displays a display representing the change ratio of each index in each of the plurality of clusters and a display for receiving the group change instruction.

9. A simulation method by a simulation system, wherein
the simulation system includes a processor, a memory, and a display device,
the memory
stores simulation results representing a plurality of scenarios indicating index vectors of a plurality of time steps each generated by simulation and a plurality of clusters in which the index vectors of the plurality of scenarios in each of the plurality of time steps are classified, and
the simulation method comprises:
receiving, by the processor, a setting for classifying the clusters of a final time step of the plurality of scenarios into a plurality of groups and executing classification based on the setting,
executing, by the processor, a scenario analysis process of calculating, for each of combinations of the time steps and the clusters, a transition probability at which the index vectors belonging to the cluster in the time step transition to each group in the final time step and a cluster in which the index vectors belonging to the cluster in the time step are transmissible in a subsequent step, and
displaying, by the processor, an analysis map including a display representing the transition probability and a display representing the transmissible cluster on the display device for each of the combinations of the time steps and the clusters.
